# EUROPEAN PATENT SPECIFICATION

(11) **EP 0 898 770 B1**
(45) Date of publication and mention of the grant of the patent: **04.10.2001**
(21) Application number: 96907175.2
(22) Date of filing: 04.03.1996
(51) Int. Cl.: G08B 15/00

(54) **COMPUTER BASED EVENT CAPTURING SYSTEM HAVING FLEXIBLE STORAGE**
RECHNERGESTÜTZTES EREIGNISERFASSUNGSSYSTEM MIT FLEXIBLER AUFZEICHUNG
SYSTEME D'ACQUISITION INFORMATIQUE D'EVENEMENTS A STOCKAGE SOUPLE

(30) Priority: 06.03.1995 US 398753
(43) Date of publication of application: 03.03.1999
(73) Proprietor: Bell, Addison, Charlotte, NC 28207 (US); Bell, Deryl L., Charlotte, NC 28277 (US); Kraft, Brady Neil, Charlotte, NC 28227 (US)
(72) Inventor: KRAFT, Brady, Neil, Charlotte, NC 28227 (US)
(74) Representative: Lomas, Geoffrey Michael
(86) International application number: US9602912
(87) International publication number: WO9627864

(56) References cited:
- GB-A- 2 250 156
- US-A- 5 229 850

## Description

This invention relates to systems used in monitoring and control in manufacturing and other environments, and more specifically to computer based event capturing systems which permit "hands free" monitoring and control.

Event capturing systems and methods are widely used for capturing video images of random "events" in a manufacturing or other environment. Examples of events include excessive pressure, insufficient pressure, incorrect positioning of parts, etc. These systems typically operate in a monitoring mode during which video images of the environment are recorded until such time as an event occurs within the environment. Upon the occurrence of an event, the video image of the event is also recorded, i.e., captured. After the event is captured, the video image captured during monitoring and the occurrence of the event may be replayed so that an engineer or other maintenance personnel can analyze the event.

Event capturing systems and methods may be classified into two major categories. The first category is analog video recording systems and the second category is high speed, solid state, fast frame recorders. The analog video recording systems record video onto magnetic tape in either slow or high speed formats. These systems typically require the recording of a large number of video images to insure that pre-event images (i.e., images of the environment prior to the occurrence of the event) are captured. Once an event occurs, the magnetic tape is linearly searched, which is often done manually, for the occurrence of the event on the magnetic tape. The tape is played in reverse to obtain the desired number of pre-event video images, and played in forward mode to obtain the desired number of post-event video images. The tape is edited in order to review only the desired portion of the video tape. Individual frames of the video images are converted to digital images or negatives in order to print hard copies of the individual frames. High speed analog video recording systems generally are expensive, and are capable of recording for only brief periods of time (i.e., a few seconds).

The second category of video event capturing systems is high speed, solid state, fast frame recorders. These systems record video at high speed and store the video images in a digitized format directly in solid state memory. As a result, the video images can be replayed at slower speeds. The images are recorded in memory in a first-in first-out ("FIFO") format resulting in continuous recording of the video images in a circular fashion, with the oldest images being overwritten by the newest images. Images are continuously recorded in a circular memory during monitoring until the desired event occurs. Once the desired event occurs, the system records the post-event video images in a circular fashion based on a predetermined delay. As a result, the number of pre-event video images is a function of the number of post-event video images. Therefore, the number of pre-event video images is directly related to the total amount of memory available, i.e., the size of the circular memory.

One example of a computer based event capturing system is disclosed in U.S. Patent No. 5,150,436 to Blessinger. The solid state, fast frame recorder disclosed by Blessinger records images of an event at a fast frame rate and plays back the images at a slower frame rate to facilitate analysis of the event. The fast frame recorder has a solid state memory capable of continuously recording an event in a circular format until an external trigger terminates recording. The number of images recorded before and after the triggering event may be varied. However, the number of frames recorded before and the number of frames recorded after the triggering event are related in that the total number of frames is fixed and cannot be any greater than the total number of frames capable of being recorded in the circular memory at any one time.

The external trigger in the Blessinger system stops storage of image frames in solid state memory upon detection of a physical phenomena unique to the event being recorded. By delaying the signal to stop recording, image frames before and after the triggering event may be stored. As a result of being able to vary the delay in recording, Blessinger allows the capture of a random occurring event. However, the Blessinger system can capture only a single event.

Another example of an event capturing system is disclosed in U.S. Patent No. 5,034,811 to Palm. This solid state motion analysis system stores digitized image frames in solid state memory. This system compares selected image frames produced by a solid state imager to identify the occurrence of a change in a characteristic between particular image frames. A first frame is set as a standard. If a change in the image characteristic is determined between subsequent frames and the standard frame, a trigger signal is produced to alter the mode of operation of the motion analysis system in order to capture a desired event. As a result, the trigger signal causes the solid state memory to either begin or stop recording image frames produced by the solid state imager.

Another example of an event capturing system is disclosed in Specification No. GB 2250156A. The system has a series of video camera inputs digitally encoded and passed to a solid state image buffer which normally operates in a cyclic mode with the image data passing continually through it. When any one of a series of intrusion detectors is triggered by an event, the operation of the buffer is latched to retain a set of successive images which were acquired prior to the event, and a set of successive post-event images. Post-event images may also be recorded in a video tape recorder in order to extend the period of post-event images.

Unfortunately, the prior art systems may not provide the flexibility necessary in order to capture images of real world events. Real world events may require capturing a large number of pre-event images and a small number of post-event images. Alternatively, real world events may require capturing a small number of pre-event images and a large number of post-event images. In addition, it is not uncommon for multiple events to occur at a single location in the environment or different locations in the environment. Prior art systems may not capture multiple events occurring at a single location in the environment or at different locations in the environment, using a single event capturing system. Thus, multiple events from either a single video or audio device or multiple video or audio devices may need to be captured. Therefore, flexibility with respect to the number of pre-event and post-event images, and the number of events captured is needed.

According to one aspect of the present invention we provide an event capturing system comprising: image capturing means for capturing a plurality of images of an operational environment;
circular storage means, having a first predetermined length, and responsive to the image capturing means, for continuously recording a first predetermined number of the plurality of images of the operational environment captured by the image capturing means;
event triggering means, responsive to occurrence of an event in said operational environment, for signalling the occurrence of an event in said operational environment; and
noncircular storage means, having a second predetermined length, and responsive to the image capturing means and the event triggering means, for continuously recording a second predetermined number of the plurality of images of the operational environment captured by the image capturing means;
wherein the first predetermined number is unrelated to the second predetermined number, characterised by second circular storage means, having a first predetermined length, and responsive to the image capturing means, for continuously recording a third predetermined number of the plurality of images of the operational environment captured by the image capturing means;
second event triggering means, responsive to occurrence of a second event in said operational environment, for signalling the occurrence of a second event in said operational environment; and
second noncircular storage means, having a fourth predetermined length, and responsive to the image capturing means and the second event triggering means, for continuously recording a fourth predetermined number of the plurality of images of the operational environment captured by the image capturing means; wherein the third predetermined number is unrelated to the fourth predetermined number.

According to a second aspect of the present invention we provide an event capturing system comprising:
image capturing means for capturing a plurality of images of an operational environment;
circular storage means, responsive to the image capturing means, for continuously circularly recording images of the operational environment captured by the image capturing means;
event triggering means, responsive to occurrence of an event in said operational environment, for signalling the occurrence of an event in said operational environment; and
converting means, responsive to the image capturing means and the event triggering means, for converting the circular storage means to noncircular storage means to enable the continuous noncircular recording of images of the operational environment captured by the image capturing means, characterised by:
   second circular storage means, responsive to the image capturing means, for continuously circularly recording images of the operational environment captured by the image capturing means;
   second event triggering means, responsive to occurrence of a second event in said operational environment, for signalling the occurrence of a second event in said operational environment; and
   second converting means, responsive to the image capturing means and the second event triggering means, for converting the second circular storage means to a second noncircular storage means to enable the continuous noncircular recording of images of the operational environment captured by the image capturing means.

The event capturing system may capture video, audio, video and audio, as well as other types of images. In addition, essentially any type of event trigger may be used. Furthermore, the event capturing system may be connected to a local or wide area network to permit both local and remote storage and playback of the captured images.

As a result, the computer based event capturing system can be tailored to real world events without worrying about hardware limitations, storage limitations, or other limitations which may affect prior art systems.

A preferred form of the invention is illustrated in the accompanying drawings, in which:
FIG. 1 is a high level block diagram of a computer based event capturing system according to the invention;
FIG. 2 is a diagram of the physical structure of the computer based event capturing system referred to in FIG. 1;
FIG. 3 is a high level flowchart illustrating the operational control of the computer based event capturing system referred to in FIGS. 1 and 2;
FIGS. 4A through 4E are block diagrams of the setup, monitoring, capturing, archiving and playback subsystems of the present invention;
FIGS. 5A through 5C illustrate storage segmentation and usage by the monitoring and capturing subsystems of the present invention;
FIGS. 6A through 6B illustrate storage segmentation and usage by the monitoring and capturing subsystems of the present invention; and
FIGS. 7A through 7F are flowcharts illustrating the operational control of the monitoring, capturing and playback subsystems.

The present invention now will be described more fully hereinafter with reference to the accompanying drawings, in which a preferred embodiment of the invention is shown. This invention may, however, be embodied in many different forms and should not be construed as limited to the embodiment set forth herein; rather, this embodiment is provided so that this disclosure will be thorough and complete, and will convey the scope of the invention fully to those skilled in the art. Like numbers refer to like elements throughout.

### General Overview: Computer Based Event Capturing System and Method

The computer based event capturing system and method according to the present invention enables events to be captured using a "hands-free" system. The system and method provides the advantages of greatly increased flexibility, ease of use and accessibility to video playback with respect to the number of signals that can be captured, the variable but unrelated lengths of the video image sequences for pre-event video and post-event video, and the ease of both local and remote storage and playback capability. The present system and method also may be used in combination with high speed cameras to provide high speed video, which results in high quality images. This is achieved by sampling frames of video images from the high speed cameras.

The computer based event capturing system and method of the present invention also has increased flexibility in the number of different environments in which it can be used. For example, this system and method may be used for monitoring manufacturing environments for quality control or trouble shooting, for security purposes, for remote periodic monitoring, for remote random event driven recording or for monitoring of aircraft systems or the like to be played back during disaster analysis.

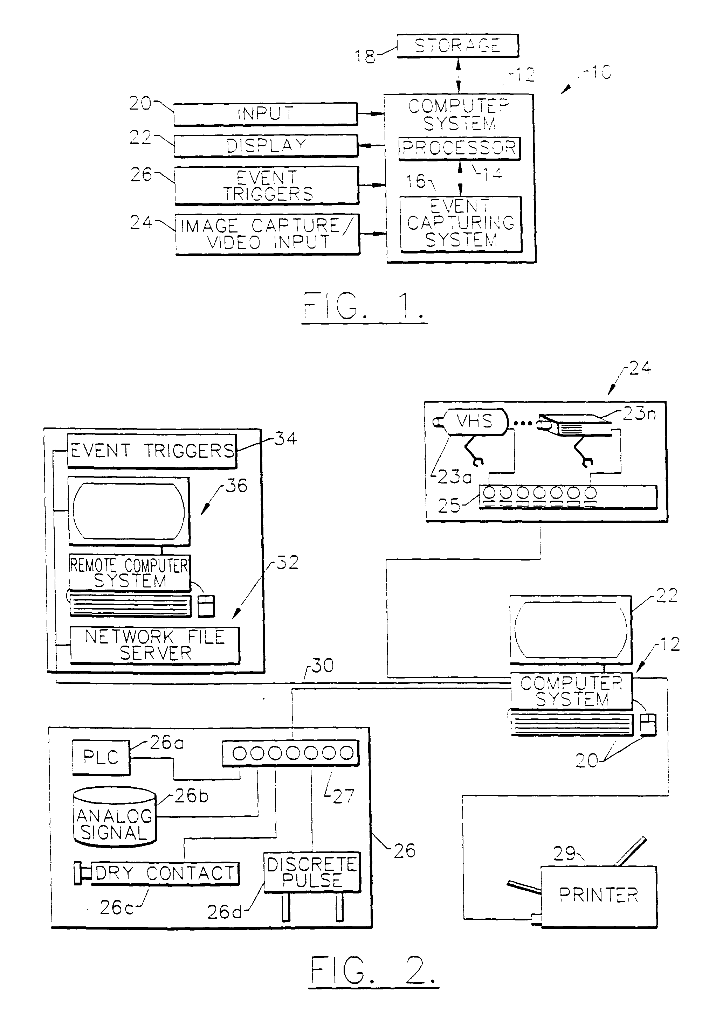

Referring to Figure 1, a general overview of a computer based event capturing system **10** will be described. The system **10** includes a computer system **12** having a processor **14** and event capturing system **16.** The computer system **12** is connected to data storage **18.** In addition, the computer system **12** is also connected to several input/output peripheral devices including input **20** and display **22.** Still further, additional input/output peripheral devices including image capture/video input **24** and event triggers **26** are also connected to computer system **12.** Input **20** may consist of a keyboard, a mouse, a virtual track ball, a light pen or any other number of devices, individually or collectively used for entering data or selecting options in computing environments. Display **22** may be a color cathode-ray tube, or any other type of display device. In addition, a printing device **29** (see Figure 2) may also be connected to the computer system **12,** the printing device taking the form of a laser printer, or any other type of printing device which may be used for printing graphic images or other information or documentation.

Preferably, processor **14** is a personal computer. Data storage **18** may include hard disk drives, tapes, etc., or any combination thereof. Data storage **18** may also be segmented into local working storage and local permanent storage. Processor **14** communicates with input **20,** display **22,** image capture/video input **24,** event triggers **26** and data storage **18.** The computer system also contains event capturing system **16.** Event capturing system **16** communicates with processor **14.** Event capturing system **16** is preferably implemented as a stored program which executes on processor **14.** Alternatively, event capturing system **16** may be implemented in special purpose hardware or a combination of hardware and software.

The local permanent storage may include local hard disks, optical storage, floppy disks or other local permanent storage devices. Permanent storage may also include remote hard disks, optical storage or other permanent storage devices which are either remote to the stand alone computer based event capturing system **10** or which may be accessed via network **30** (see Figure 2).

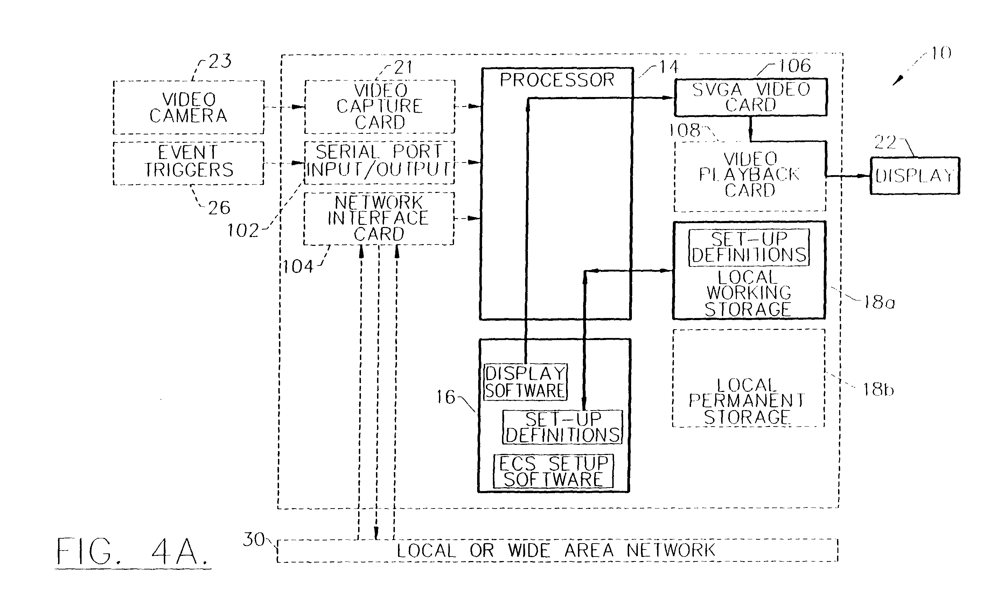

Image capture/video input **24** may take the form of a standard VHS video camera **23** (see Figures 4A-4E) in combination with the necessary video capture card **21** (see Figures 4A-4E). Video multiplexer **25** (see Figure 2) is also included in image capture/video input **24** if multiple video cameras **23** are used. The video input signal takes the form of a NSTC (i.e., National Television Standards Committee) or PAL (i.e., Phase Alternation/Alternate/Alternating Line) signal. An example of the video cameras which may be used include Panasonic Model WV CL354, manufactured by Matsushita Communication Industrial Company, Ltd. of Yokohama, Japan. A video capture card which is suitable for use in combination with the video camera, as combined to form the image capture/video input **24,** includes the DVA 4000 card marketed by Video Logic, Inc. of Cambridge, Massachusetts. Multiple VHS cameras may be used, with the multiple cameras being connected to a video multiplexer. The video cameras, which may be portable, can be either hardwired (i.e., directly connected) to the video capture cards or may be connected by wireless means.

Event triggers **26** may be either discrete or analog devices. Examples of these devices include PLCs (i.e., programmable logic controls), measuring devices, DCSs (distributive control systems), dry contacts or discrete pulse triggers. Each of these serial triggers is connected to a serial input multiplexer **27** (see Figure 2) which in turn is then connected to a communication serial port input/output card **102** (see Figures 4A-4E) for receiving the serial trigger signal.

Finally, the computer based event capturing system **10** can operate in an isolated, stand alone environment or can be connected to a local or wide area network **30** (see Figure 2). It will be understood by those having skill in the art that in order to connect the computer based event capturing system **10** to a local or wide area network, a network interface card **104** (see Figures 4A-4E) is required.

### Overview: Event Capturing System Physical Structure

Referring to Figure 2, a detailed illustration of the physical structure of the computer based event capturing system **10** is illustrated. As illustrated, computer system **12** is connected to input devices **20,** display **22** and printer **29.** In addition, computer system **12** is also connected to image capture/video input **24** and event triggers **26.** Finally, computer system **12** may be connected to a network **30** which has a number of additional devices including additional event triggers **34,** computer systems **36** and file server **32** connected thereto. Image capture/video input **24** includes at least one video camera **23,** and may include the multiple VHS cameras or other video input devices **23a-23n.** Each of the video cameras **23** is connected to a video multiplexer **25.** As previously described, event triggers **26** may include a number of different serial triggers including PLC **26a,** analog signal **26b,** dry contact **26c** and/or discrete pulse trigger **26d.** Each of these event triggers **26** is connected to a serial input multiplexer **27,** which in turn is connected to computer system **12** for purposes of communicating the event trigger signal generated by event triggers **26** to computer system **12.**

### Overview: Event Capturing System and Method Components (Subsystems)

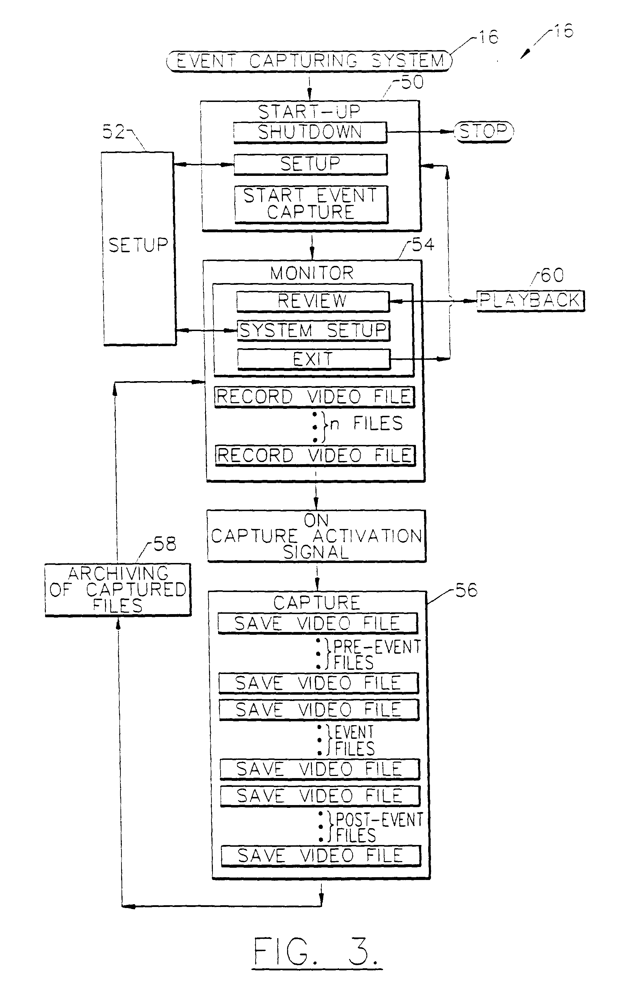

Referring to Figure 3, a high level flowchart of event capturing system **16** will now be described. Event capturing system **16** contains subsystems for system start up **50,** setup **52,** monitoring **54,** capturing **56,** archiving **58,** and playback **60.** The components of event capturing system **16** will now be described generally. A detailed description of many of these components will be described below in the sections labeled "Detailed Operation." Start-up subsystem **50** essentially allows the user to either begin or complete three different tasks (i.e., shut down, setup or event capture). If the user selects to evoke the setup subsystem, control is transferred to setup subsystem **52.** If the user decides to shut down event capturing system **16,** the system is exited and any files stored in permanent storage (see data storage **18** in Figure 1) are permanently maintained. During shut down, event capturing system **16** will close any open files, stop all programs running in the Windows™ environment and return control to computer system **12.** Finally, if the user decides to start the event capturing process, control is transferred to monitoring subsystem **54.**

Setup subsystem **52** is implemented by event capturing system **16** to define various parameters used by event capturing system **16.** For example, during implementation of setup subsystem **52,** various security measures may be changed including the password for the current user. In addition, the user may also add, remove or rename predefined capture definitions. The user also may select a printer, change the video logic program, or transfer control to a Microsoft Windows™ program, manager program or to a Microsoft Windows™ file manager program. In addition, the user may enable or disenable various event triggers including various mouse triggers, COM (i.e., communication port) triggers such as PLCs, analog signals, dry contacts or discrete pulse triggers, and DDE (i.e., dynamic data exchange) triggers. Finally, the user may change the recorder settings (i.e., the recording setup for the currently selected predefined capture definitions). By changing the recorder settings, the user may define the temporary work directory, the permanent record directory, the length of the video image sequence being recorded during the pre-event, event and post-event periods, the number of pre-event sequences or files permanently saved and the number of post-event sequences or files permanently saved. Additionally, the user can select to record sequences directly to permanent storage, to record sequences to working storage and archive them to permanent storage, or to record sequences to working storage, merge the files into a single file and archive the resulting single file in permanent storage.

Monitoring subsystem **54** of event capturing system **16** begins the actual event capturing process. The monitoring subsystem **54** records video image sequences (i.e., files) of a manufacturing or other environment. The length of the video image sequences or files is determined by the setup subsystem. The number of video image sequences or files which are stored in local working storage at any given time during monitoring is set by the event capturing system **16.** The video image sequences or files obtained by the image capture/video input **24** during monitoring are recorded in a circular fashion such that the oldest video image sequence or file may be overwritten by the newest video image sequence or file. As an alternative, the storage location used for storing the oldest video image sequence or file may be released and the newly retrieved video image sequence or file may be stored in the next available location in the local working storage.

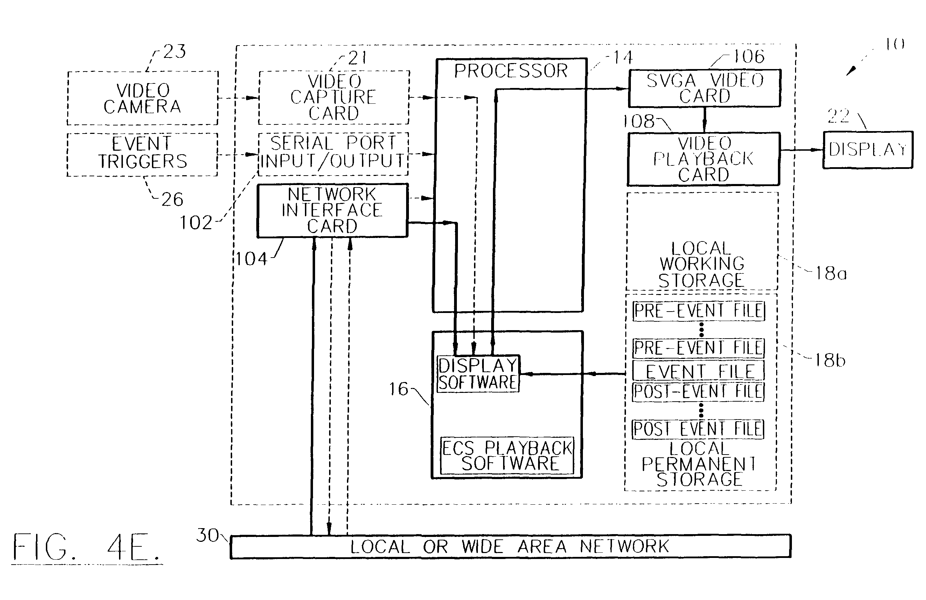

During monitoring, a live video picture may be displayed on display 22. Still further, the user has the option of: (i) reviewing previously captured image sequences or files retrieved by the playback subsystem by transferring control to playback subsystem **60,** (ii) returning to setup subsystem **52** in order to further define various parameters to be utilized by the event capturing system **16,** or (iii) exiting the monitoring process and returning to the start up subsystem **50.** The segmentation and usage of the local working storage used by the monitoring subsystem **54** will be described below with respect to Figures 5A-5C.

Once event capturing system **16** receives a trigger signal from one of event triggers **26,** control is transferred to capture subsystem **56.** Capture subsystem **56** controls the recording of video image sequences or files during the event as well as after the event has occurred. Three options are available to the user of event capturing system **16.** The user can indicate that the video image sequences or files are to be stored directly in permanent storage so that files saved during monitoring (i.e., pre-event files), during the event and during capture (i.e., post-event files) are stored directly in permanent storage. The second option is to record the video image files in working storage, and then archive the video image files in permanent storage such that files recorded during monitoring (i.e., pre-event files) are stored in the local working storage, all files recorded during the event and after the event (i.e., post-event) are stored in local working storage, and thereafter, all files are archived to permanent storage. In this case, once all files have been archived in permanent storage, they are deleted from working storage. Finally, the third alternative is to record the video image files in working storage, merge or concatenate the pre-event video image files, the event image files and the post-event image files into one large file, and archive the one large file to permanent storage. The three sets of files are merged and copied to permanent storage. All files stored in working storage are deleted.

The number of video files recorded by capture subsystem **56** is limited only by the number of files or segments containing an event plus the setting of the parameter for the number of post-event segments to be saved. This parameter, as previously described, is defined by setup subsystem **52.** The number of post-event files is not related to the number of pre-event files nor the total number of pre-event, event and post-event files. The segmentation and usage of the storage for storing the post-event files will be described below with respect to Figures 5A-5C.

Subsystem **58** provides for archiving of the video image sequences or files and storage of those files in permanent storage.

Finally, playback subsystem **60** allows the user to review the video image files from the pre-event, event and post-event periods for any particular event. By default, the latest event captured will be displayed on display **22.** However, the user may select any event which has been captured and may review the pre-event, event and post-event files for any given event.

### Detailed Structure of Event Capturing System and Method

Referring to Figures 4A-4E, block diagrams illustrating the functionality of the setup **52,** monitoring **54,** capturing **56,** archiving **58** and playback **60** subsystems will now be described. The functionality of setup subsystem **52** (see Figure 3) may be represented by the block diagram illustrated in Figure 4A. Those components of the computer based event capturing system **10** illustrated by the hashed marks (e.g., video camera **23** or event triggers **26**) are not utilized by the setup subsystem. During setup, event capturing system **16** causes processor **14** to display setup screens on display **22** via the SVGA video card **106.** The event capturing system **16** also allows the processor **14** to control user setting of various setup definitions which are then stored in local working storage **18a.** The setup definitions are the predefined capture setup definitions used by the event capturing system **16** during operation.

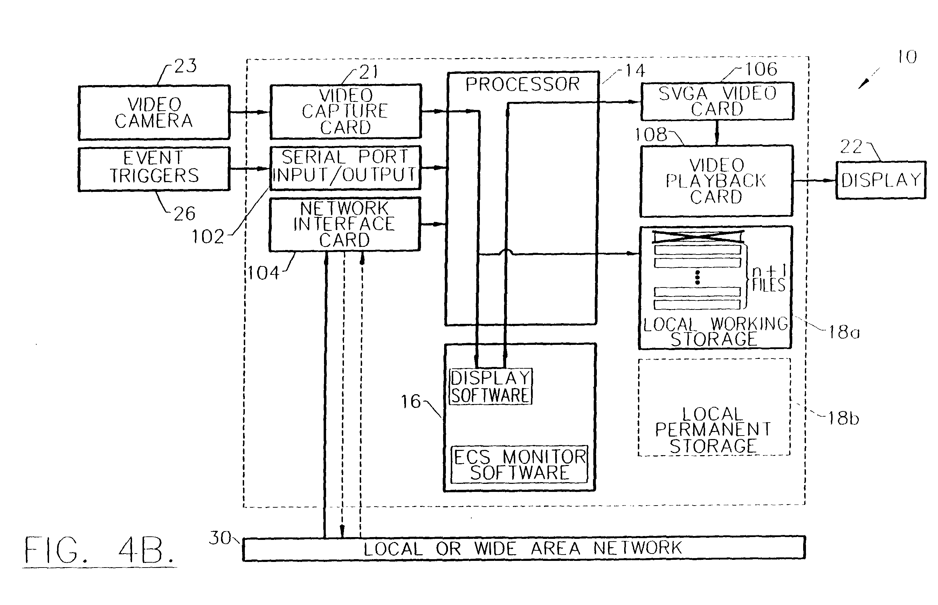

Referring to Figure 4B, the functionality of monitoring subsystem **54** will now be described. During monitoring, the video image of the environment is captured by the combination of video camera **23** and video capture card **21.** The captured images are then transferred to the processor **14.** Processor **14** buffers the images into files or sequences of the size defined by the predefined capture setup definitions and stores the files in local working storage **18a.** The maximum number of files stored in local working storage **18a** at any given time is set by the event capturing system **16.** Once the maximum number of files (i.e., *n* files) have been stored, the storage location for the oldest file in local working storage **18a** is either overwritten by the newest file or, in the alternative, is released and the newly captured image file is stored in the next available storage location in local working storage **18a.** Concurrent with the storage of the image files in local working storage **18a,** event capturing system **16** also causes processor **14** to transfer the video images to SVGA video card **106,** and then in turn to video playback card **108** which causes the images to be displayed on display **22** for viewing by the user. This process continues until an event trigger signal is either received from event triggers **26** or across network **30** and network interface card **104** or the user chooses to exit the monitoring subsystem.

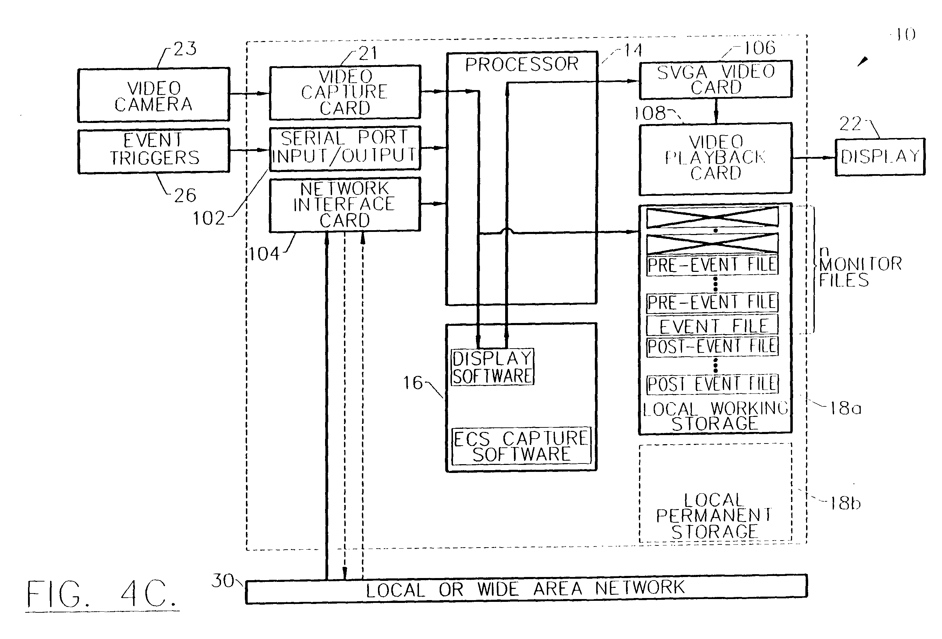

Referring to Figure 4C, functionality of capturing subsystem **56** will now be described. The functionality of capturing subsystem **56** is similar to that of monitoring subsystem **54** described with respect to Figure 4B in that video images continue to be captured by image capture/video input **24** (i.e., video camera **23** and video capture card **21**) and stored in local working storage **18a** by processor **14.** In addition, the captured video images continue to be displayed on display **22.** However, capturing subsystem **56** is activated once monitoring subsystem **54** receives an event trigger signal from event triggers **26** or across network **30.** Upon receipt of the event trigger signal, event capturing system **16** causes processor **14** to change the method for storing the video image files in local working storage **18a.** While the video image files were stored in local working storage **18a** in a circular fashion during monitoring, event capturing system **16** causes processor **14** to change the control of local working storage **18** so that the video image files are no longer stored in a circular fashion. Rather, the video image file(s) containing the event(s) is stored in local working storage **18a** in the next available location. Thereafter, the video image files containing the images captured after the event (i.e., post-event files) are stored in local working storage **18a** in a sequential manner without reference to the predefined maximum number of pre-event files. As a result, the number of post-event video image files (i.e., *m* files) is limited only by the predefined maximum number of post-event video image files which was defined during setup, and not by the maximum number of pre-event video image files (i.e., *n* files). This storage scheme will be further described below with respect to Figures 5A-5C below. Video image files recorded during the post-event phase continue to be captured and stored in local working storage **18a** until the maximum number of post-event video image files as defined during setup has been captured.

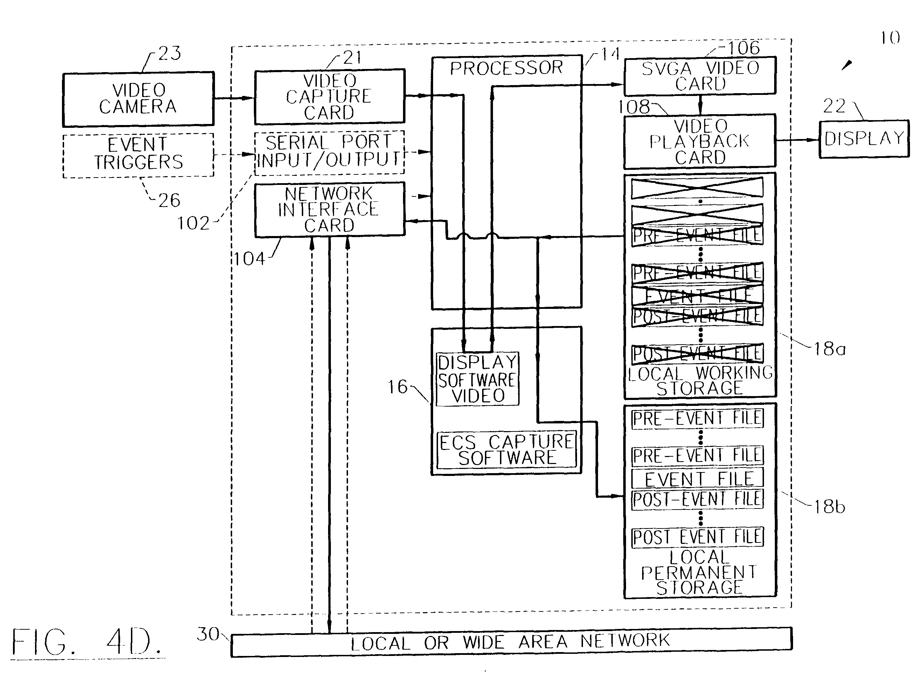

Referring to Figure 4D, the functionality of archiving subsystem **58** will now be described. During archiving, the video image files recorded during the pre-event, event and post-event periods for a particular event are transferred from local working storage **18a** to either local permanent storage **18b** or, in the alternative, to a network file server via network interface card **104** and network **30.** The user may indicate the location where the captured pre-event, event and post-event video image files are to be stored during execution of setup subsystem **52.** Also during archiving, the video images of the environment continue to be displayed by processor **14** on display **22.** In addition, depending on the option selected by the user, the files in local working storage may be deleted or erased.

Referring to Figure 4E, the functionality of playback subsystem **60** will now be described. If the pre-event, event and post-event video image files for the particular event which is to be reviewed or played back are stored in local permanent storage **18b,** event capturing system **16** retrieves the pre-event, event and post-event video image file to be reviewed from local permanent storage **18b,** and causes processor **14** to transfer the video images to SVGA video card **106.** These images are then transferred to video playback card **108,** and displayed on display **22** for review by an engineer or another individual conducting an analysis of the event. If the pre-event, event and post-event video image file for the particular event has been stored on a file server or at another location on network **30,** event capturing system **16** retrieves the video image file from that remote location via network **30** using network interface card **104** and causes the video image file for the particular event to be displayed on display **22.**

### Detailed Description: Storage Segmentation and Usage

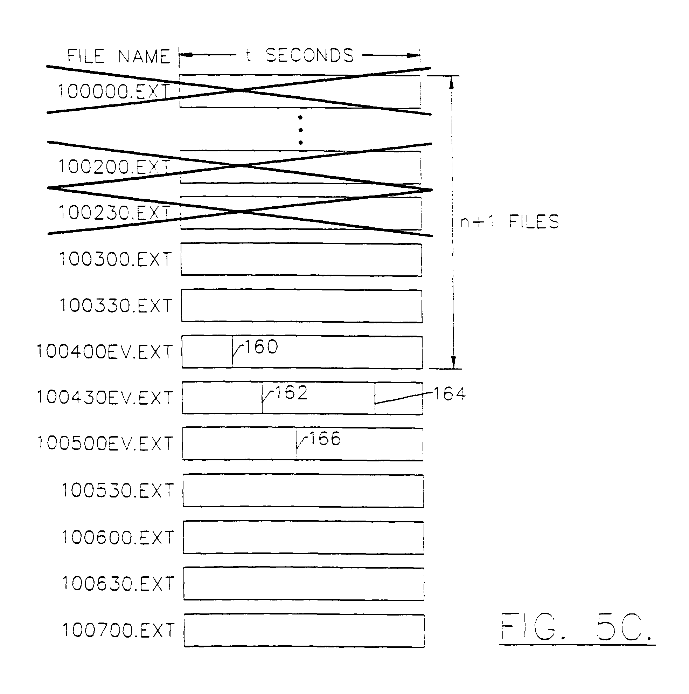

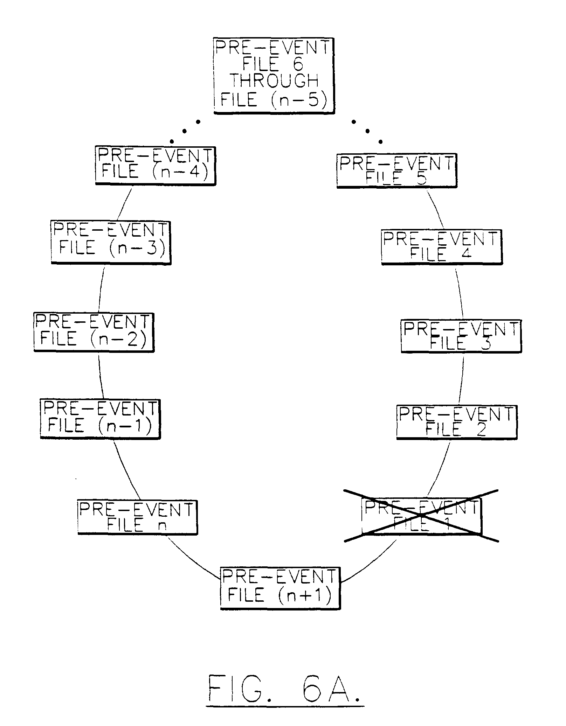

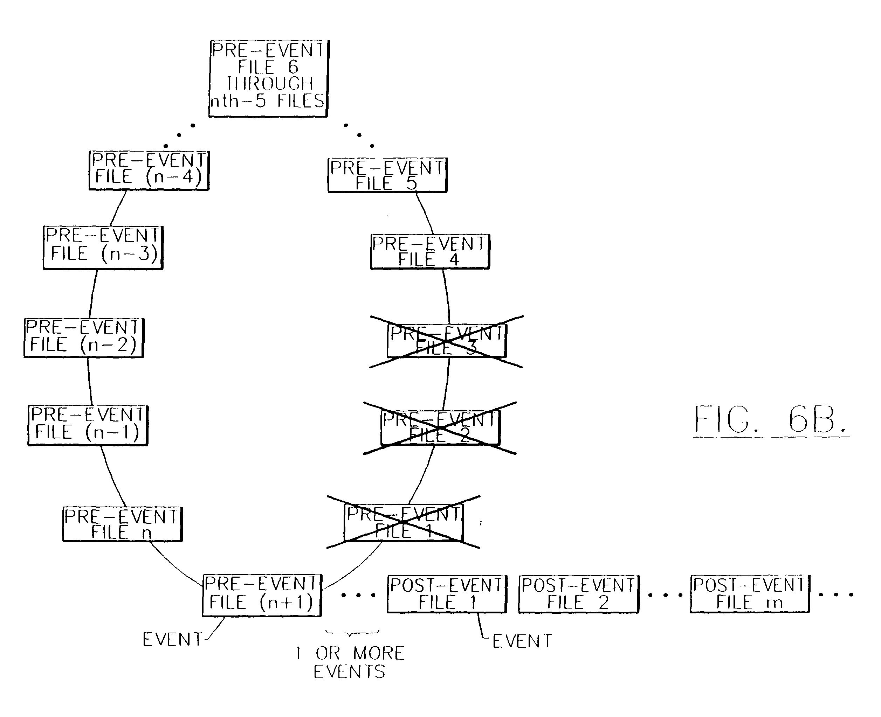

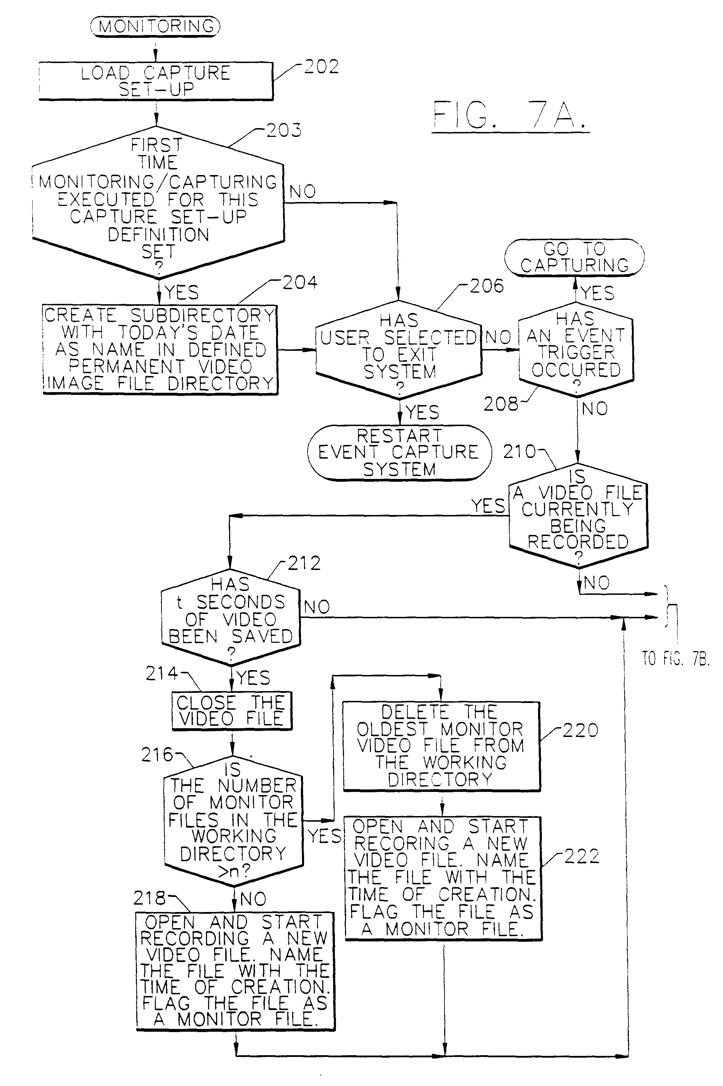

Referring to Figures 5A-5C and Figures 6A-6B, the segmentation and usage of storage during monitoring and capturing will now be described. As previously described above, the video image files are stored in a circular fashion during monitoring and are stored in a non-circular fashion during capturing after the occurrence of an event. As a result, there is no correspondence between the number of video image files stored during the post-event period and the number of video image files stored during monitoring in the pre-event period.

Referring to Figures 5A-5C, a diagram illustrating the storage of video image files during the pre-event, event and post-event periods is illustrated. Manipulation of local working storage during monitoring is illustrated in Figure 5A. Each video image file (which may be referred to as either a video clip or segment) has a length of t seconds. This length is predefined by the user in the setup subsystem. Similarly, a maximum of *n* files are stored in local working storage **18a** at any given time during monitoring. Once n files have been stored in local working storage, the storage location for the oldest file is released and the newest file (i.e., file n+1) is stored in the next available location in local working storage **18a.** As an alternative, the location in local working storage **18a** having the oldest file stored therein may simply be overwritten with the newest file (i.e., file n+1). Each video image file is given a unique date/time/event stamp file name. Thus, as illustrated in Figure 5A, once n files have been stored in local working storage **18a,** the oldest file (i.e., 100000.EXT) is deleted and the newest file is stored in the next available location of local working storage (i.e., 100400.EXT).

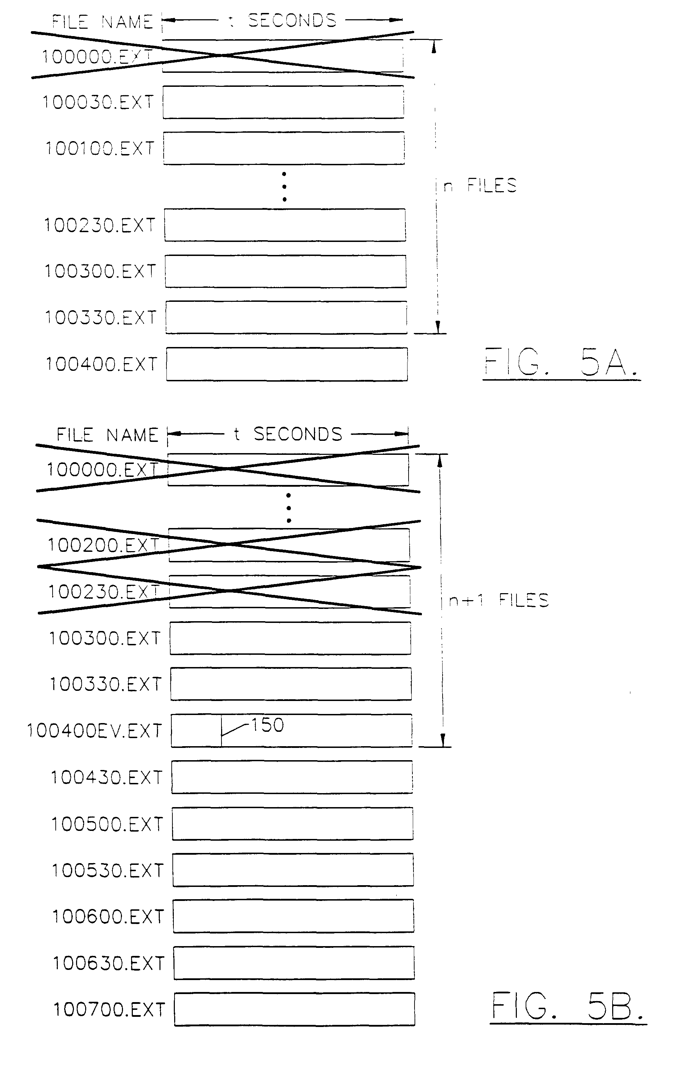

Referring to Figure 5B, the management of local working storage during capturing of an event will now be described. When an event occurs, the images occurring right after the event continue to be recorded until the recording of the video image file containing the event is completed. Referring to Figure 5B, an event occurred at **150.** Once the recording of the video image file containing the event is completed, the file containing the event is renamed to specifically identify it as the file which contains an event (e.g., 100400EV.EXT). Event capturing system **16** then continues to record images of the environment until the total number of post-event files as defined by the user during setup have been recorded. Referring to Figure 5B and assuming that the number of pre-event files and the number of post-event files were defined by the user during setup as two and five, respectively, event capturing system **16** records five video image files after the file containing the event. Upon completion of the recording of all post-event files (in this case, five post-event files), the pre-event files (e.g., 100300.EXT and 100330.EXT), the event file (e.g., 100400EV.EXT) and the post-event files (e.g., 100430.EXT, 100500.EXT, 100530.EXT, 100600.EXT and 100630.EXT) are all tagged and identified for storage in permanent storage. Thereafter, event capturing system **16** moves all the tagged flags to permanent storage, deletes all video image files older than the oldest pre-event file which was tagged and moved to permanent storage, and starts recording the next video image file for monitoring. As illustrated in Figure 5B, event capturing system deletes all files older than the video image file having filename 100300.EXT and begins monitoring the environment by recording the next video images in the file named 100700.EXT.

Referring to Figure 5C, management of local working storage during capturing of multiple events will now be described. Local working storage **18a** is managed in essentially the same manner whether a single event or multiple events occur. For example, assuming that an event occurs at **160** as illustrated in Figure 5C, event capturing system **16** continues recording images of the environment until the file containing event **160** is completed and renames this file to identify it as a file containing an event (e.g., 100400EV.EXT). This file is then tagged for permanent storage. Event capturing system **16** then begins to record the post-event files for first event **160.** Assuming that the number of post-event files was predefined by the user during setup as three, event capturing system **16** records the next three video image files. However, while recording the post-event files for the first event **160,** event capturing system identifies a second event **162** and a third event **164** which are both recorded in the same video image file. As a result, event capturing system **16** continues recording images of the environment until the video image file containing events **162** and **164** has been completed and then renames this file to identify it as a file containing one or more events (e.g., 100430EV.EXT). In addition to being a file that contains one or more events, this file is also a post-event file for the first event **160.** Event capturing system **16** tags this file (i.e., 100430EV.EXT) for permanent storage and starts recording the post-event files for the second event **162** and third event **164.** However, during recording of the post-event file for the second event **162** and third event **164,** event capturing system **16** identifies a fourth event **166.** As a result, event capturing system **16** continues recording images of the environment until the video image file containing the fourth event **166** is completed, renames this file to identify it as a file containing an event (e.g., 100500EV.EXT) and tags this file for permanent storage. Thereafter, event capturing system **16** then proceeds to capture the post-event files for the fourth event **166.** Upon completion of the post-event files for **166** (e.g., 1005300.EXT, 100600.EXT and 100630.EXT), the two pre-event files (i.e., 100300.EXT and 100330.EXT) and the three post-event files (i.e., 100530.EXT, 100600.EXT and 100630.EXT) are tagged for permanent storage and all of the tagged pre-event, event and post-event files are moved to permanent storage.

Thereafter, event capturing system **16** deletes all files captured during the monitoring period which are older than the oldest pre-event file and begins monitoring the environment by recording the next video images in the file named 100700.EXT.

Referring to Figures 6A and 6B, the management of local working storage during monitoring and capturing may be represented in a different manner. For example, in Figure 6A, *n* files are recorded during monitoring. Once pre-event file n+1 is recorded, pre-event file 1 is deleted. This process continues with the oldest pre-event file being deleted upon the newest pre-event file being recorded so that *n* pre-event files are stored in local working storage at any given time during monitoring.

Referring to Figure 6B, the management of local working storage during capturing is illustrated. Upon the occurrence of one or more events, event capturing system **16** records the number of post-event video image files as defined by the user during setup. Thereafter, the number of pre-event video image files as defined by the user during setup, the video image files containing each of the one or more events and the number of post-event video image files as defined by the user during setup are each tagged for permanent storage. All tagged files are then moved to permanent storage. The pre-event video image files older than the oldest pre-event video image file are then deleted from local working storage.

The minimum number of pre-event video image files which can be permanently saved is 0 and the maximum number of pre-event video image files which can be permanently saved is *n*. The minimum number of event video image files which can be permanently saved is 1 while the maximum number of event video image files which can be permanently saved is limited only by the maximum logical size of the currently selected permanent storage. Finally, the minimum number of post-event video image files which may be permanently stored is 0 and the maximum number of post-event video image files which may be permanently stored is limited by the number defined by the user during setup and the maximum logical size of the currently selected permanent storage (i.e., *m* files). As a result, there is no relationship between the maximum number of post-event video image files (i.e., *m* files) and the maximum number of pre-event video image files (i.e., *n* files). Similarly, there is no correspondence between the maximum number of post-event video image files and the total number of video image files stored in permanent storage for a particularly event. In addition, the length of each video image file (i.e., length of the segment in seconds) may vary.

For example, the number of pre-event files may be 5 while the number of post-event files may be 1. Alternatively, the number of pre-event files may be 4 while the number of post-event files may be 6. Still further, the length of each file or segment may be, for example, 15, 30 or 45 seconds.

### Detailed Operation: Event Capturing System Software

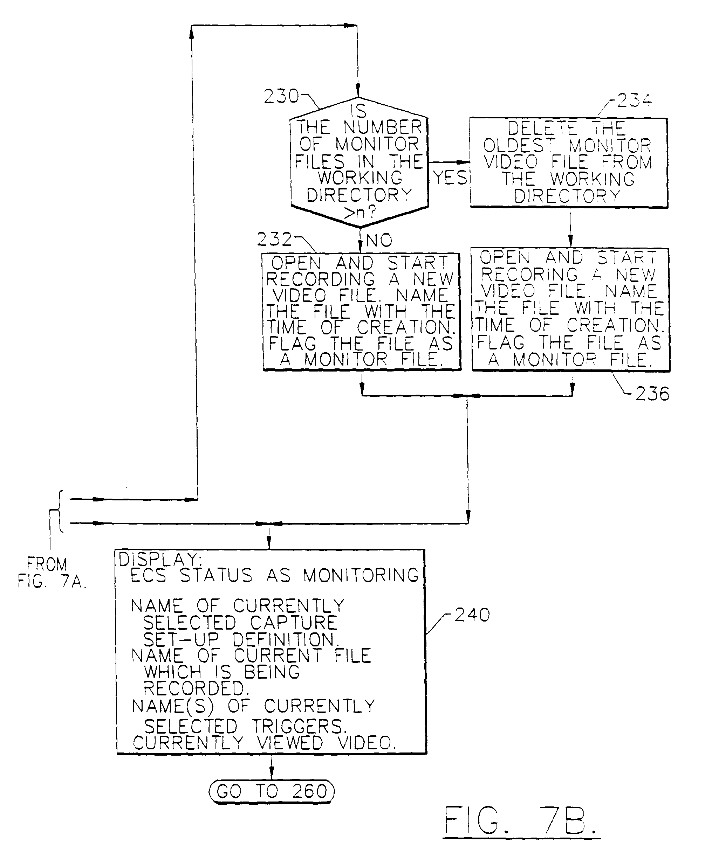

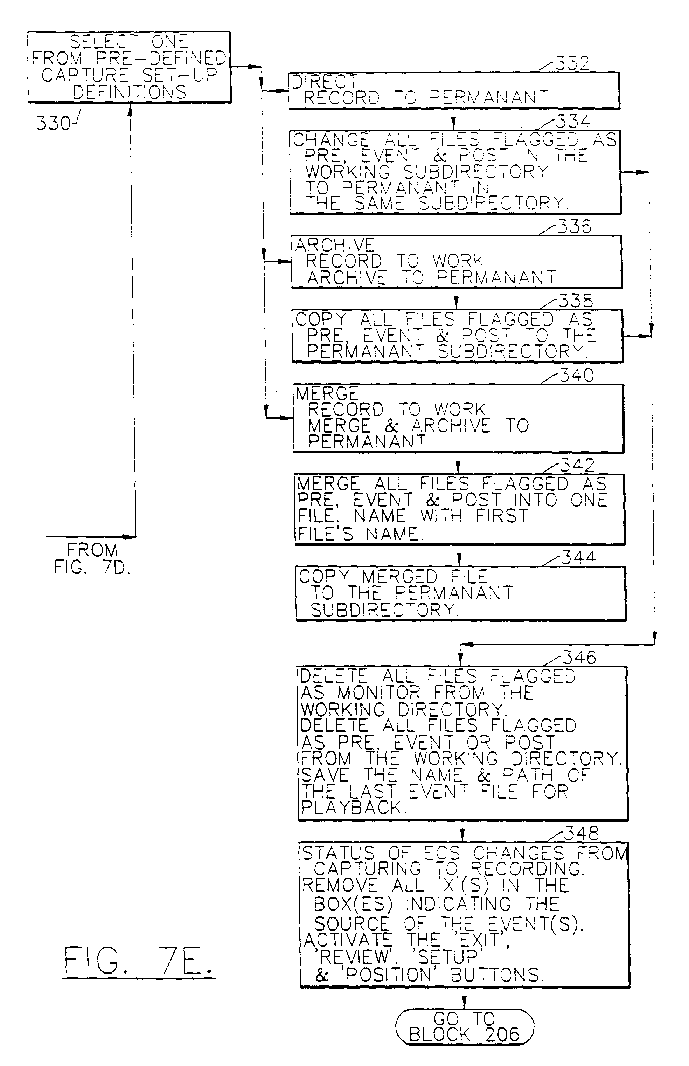

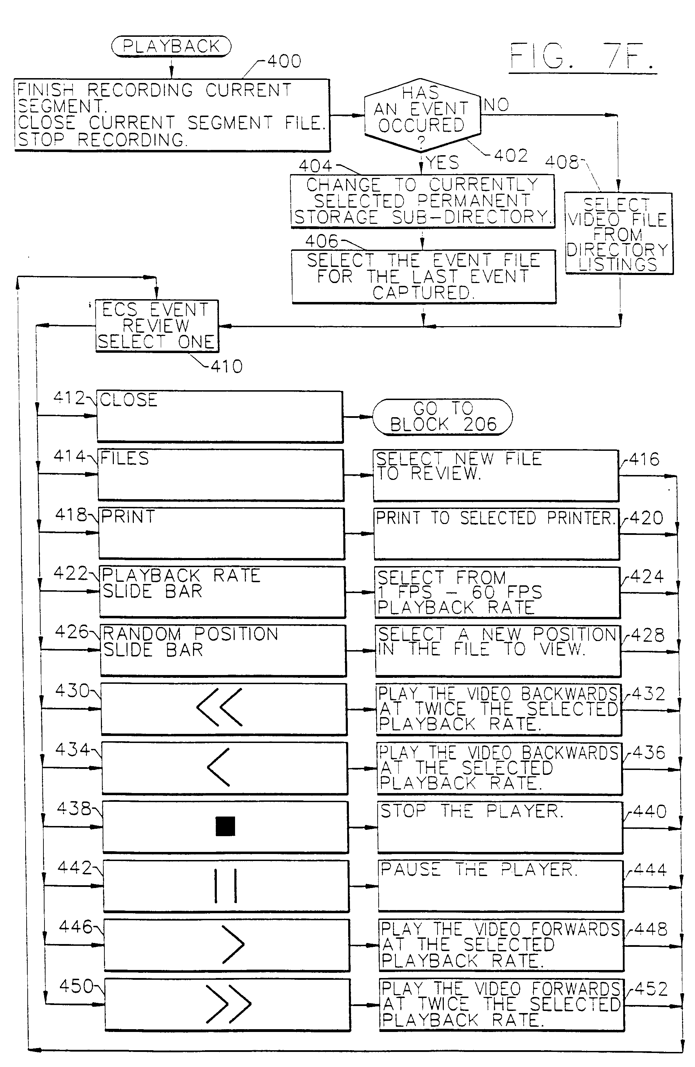

The sequence of operations performed by the event capturing system will now be described with reference to Figures 7A-7F. The flowcharts in Figures 7A-7F provide the flow control for the monitoring subsystem, the capturing subsystem and the playback subsystem. It will be understood by those having skill in the art that the operational flow defined by the flowcharts in Figures 7A-7F may be implemented by computer system **12,** operating under stored program control.

### Detailed Operation: Monitoring Subsystem

Referring to Figures 7A-7C, the detailed operation of the monitoring subsystem will be described. At the outset, event capturing system **12** loads the setup parameters defined during setup at **202.** The parameters loaded are those for the current or the most recently selected capture setup definitions. If the event capturing system is continuing to monitor using the current set of capture setup definitions, then the most recent selected captured setup definitions are loaded. Thereafter, a determination is made at **203** as to whether this is the first time that the monitoring subsystem and capturing subsystem have executed using the selected capture setup definitions set. If it is determined at **203** that this is the first time that the monitoring subsystem and capturing subsystem have executed on the selected setup definition set, a subdirectory identified using the current date as the name for the permanent video image file directory is created at **204.**

Whether or not this is the first time that the selected setup definitions set has been used by the monitoring subsystem and capturing subsystem, a determination is made at **206** as to whether the user has indicated that the event capturing system is to be started. If the user has selected to exit the event capturing system, control is returned so that the system may be restarted in the future. If the user has not selected to exit the event capturing system, a determination is made at **208** as to whether an event trigger has occurred. If an event trigger has occurred, control is transferred to the capturing subsystem which is described below with respect to Figure 7D. If no event trigger has occurred, a determination is made at **210** as to whether a video image file was currently being recorded.

If it is determined at **210** that a video image file is currently being recorded, a determination is made at **212** as to whether the current video image file has been completely recorded (i.e., whether *t* seconds of video image as defined during setup have been saved). If it is determined that *t* seconds of video have been saved, the current video image file is closed at **214.** Thereafter, a determination is made at **216** as to whether the number of video image files stored during monitoring in the local working storage is greater than n files as defined during setup. If it is determined that the maximum number of video image files to be stored during monitoring has not been exceeded, a new file is opened, the new file is named with the time of creation, the new file is tagged as a "monitor" file, and event capturing system begins recording images and storing the images in the new file at **218.** If it is determined at **216** that the number of monitoring video image files presently stored in the local working storage is greater than *n* files, then the oldest monitoring video image file is deleted from the local working storage at **220.** Thereafter, a new video image file is opened, the new file is named with the time of creation, the new file is tagged as a "monitor" file and the event capturing system begins recording images in the new video image file at **222.**

If it is determined at **210** that a video image file was not presently being recorded, a determination is made at **230** as to whether the number of monitor video image files in the local working storage is greater than *n* files (i.e., the maximum number of monitoring files as defined during setup). If it is determined that the number of monitoring video image files is less than the maximum allowed, a new video image file is opened, the new file is named with the time of creation, the new file is tagged as a "monitor" file and the event capturing system begins recording video images and storing them in the new video image file at **232.** However, if it is determined that the number of monitor video image files presently stored in the local working storage is greater than the maximum number allowed, then the oldest monitor video image file is deleted from the local working storage at **234.** Thereafter, a new video image file is opened, the file is named with the time of creation, the file is tagged as a "monitor" file, and images are stored in the new video file at **236.**

Once recording has begun at **218, 222, 232** or **236,** the event capturing system displays the status of the system as "monitoring" on display **22** along with the name of the currently selected capture setup definition, the name of the current file which is being recorded, and the names of the currently selected event triggers. In addition, the images presently being captured during monitoring are displayed on display 22. This all occurs at **240.** Thereafter, control is transferred to **260** to continue execution by the monitoring subsystem.

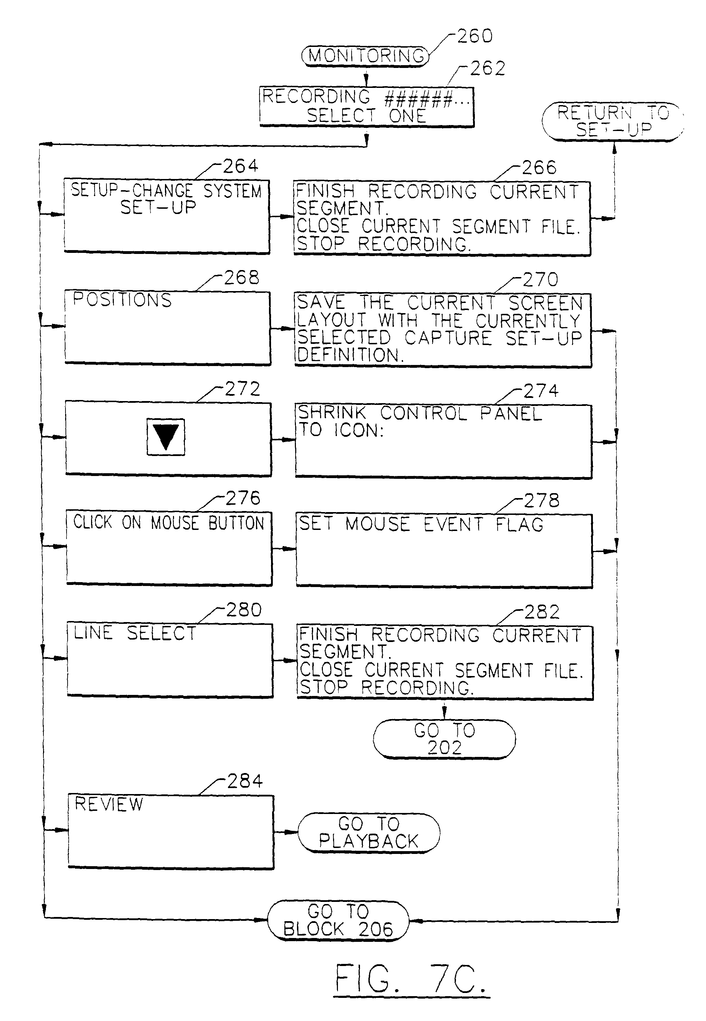

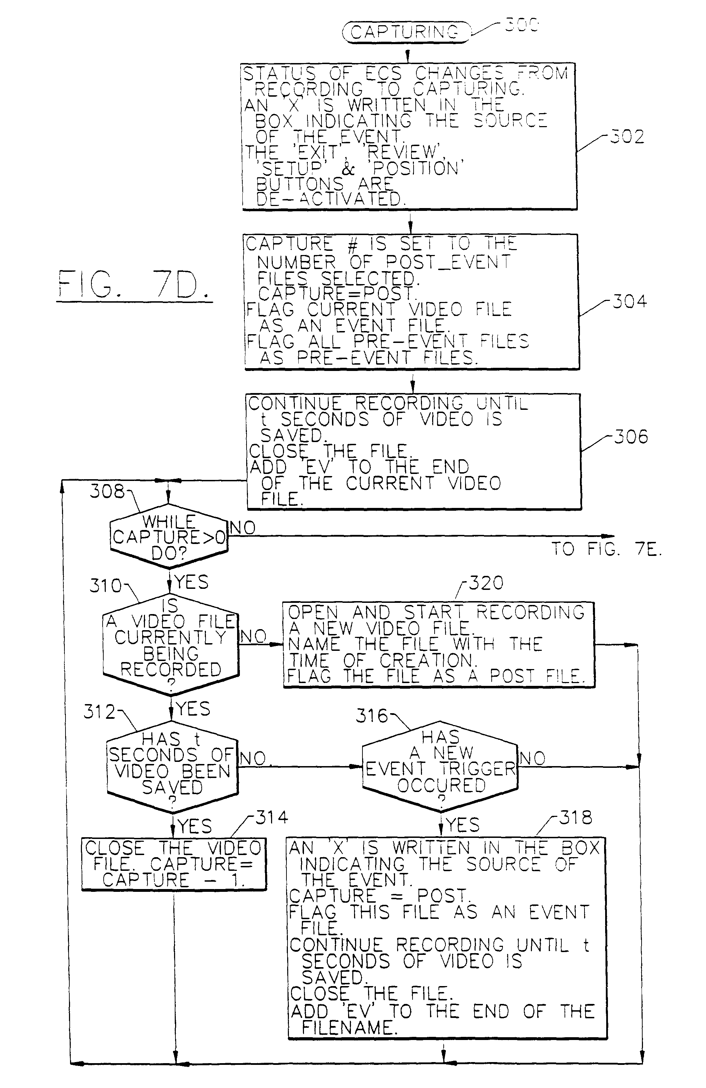

Referring to Figure 7C, continuation of the processing of execution by the monitoring subsystem will be described. While event capturing system continues to record images during monitoring, the user has the option of changing the setup, changing positions, changing the display, or setting event flags or line selects at **262.** If the user decides to change the setup at **264,** the event capturing system continues recording video images until the current video image file is completed or full, closes the current video image file, and stops recording at **266.** Thereafter, control is returned to setup to allow the user to change the setup for the event capturing system provided that the user has the appropriate security clearance. If it is determined at **268** that the user decided to change the physical layout of the screen by selecting the "positions" key at **268,** the current layout of the display **22** and the current setup definitions being used by the event capturing system are saved at **270** and control is returned to **206** to begin monitoring again. The user may also change the control panel displayed on display **22** to an icon by selecting a "▼" (i.e., down arrow key) at **272.** If the "▼" key is selected at **272,** the control panel is downsized to an icon at **274.** The user may also set event flags by indicating the event flag to be set using input **20** at **276.** Thereafter, event capturing system sets the event flags selected by the user at **278,** and control is returned to block **206** to continue the monitoring process.

After completing the change of positions at **268** and **270,** the downsizing of the control panel at **272** and **274** or the setting of event flags at **276** and **278,** control is transferred to Block **206.**

The user can select a different predefined capture setup definition for the various environments by selecting the "line select" key at **280.** As a result, the event capturing system continues recording images and storing those images in the current video image file until the current video image file is complete or full, closes the current video image file and stops recording images at **282.** Thereafter, control is returned to block **202** to continue the monitoring process.

Finally, the video image files recorded and stored during monitoring can be reviewed at **284.** If the user selects the review option at **284,** control is transferred to the playback subsystem.

If none of the options are selected by the user, the event capturing system returns control to Block **206** and continues the monitoring process.

### Detailed Operation: Capturing Subsystem

Referring to Figure 7D-7E, the detailed operation of the capturing subsystem will now be described. At the outset, the capturing subsystem displays an indication on display **22** that the event capturing system is in the capturing mode at **302.** The event capturing system also displays an indication as to the source of the event, and deactivates the "Exit", "Review", "Setup" and "Position" buttons. Still further, the event capturing system sets the number of video image files to be selected equal to the number of post-event video image files defined during setup, tags the current video image file being recorded as the event file, and tags the pre-event files recorded during monitoring equal to the number of pre-event files to be permanently stored as pre-event video image files at **304.** Thereafter, the event capturing system continues recording images and storing the images in the current video image file until the current video image file is complete or full (i.e., *t* seconds of video image has been saved), closes the file and adds the designator "ev" to the end of the current video file name at **306.**

A determination is then made at **308** as to whether the number of post-event video image files to be captured is greater than zero. If it is determined at **308** that the appropriate number of post-event video image files has not been captured (i.e., number of files to be captured is greater than zero), a determination is made at **310** as to whether a video image file is currently being recorded. If a video image file is currently being recorded, a determination is made as to how many seconds of video images have been saved in the current video image file at **312.** If the current video image file is full (i.e., t seconds of video image have been saved in the current video image file), the current video image file is closed and the capture parameter is decreased by one at **314.** Thereafter, control is returned to block **308** to continue the capture process.

If it is determined at **312** that the current video image file is not full, a determination is made at **316** as to whether a new event has occurred. If a new event has occurred, the event capturing system displays an indication on display **22** as to the location of the source of the event, sets the capture parameter equal to the number of files to be included in the post-event file sequence, flags the current video image file as an event file, continues recording until the current video image file is full (i.e., *t* seconds of video image have been saved in the current video image file), closes the file and adds the identifier "ev" to the end of the file name at **318.** If a new trigger has not occurred, control is returned to block **308** to continue the capture process.

If it is determined at **310** that a video image file was not currently being recorded, a new video image file is opened, the new file is identified by the time of the opening or creation of the file, the new file is tagged as a post-event file, and the event capturing system begins recording images in the new video image file at **320.**

If it is determined at block **308** that the capture parameter is not greater than zero (i.e., the number of post-event video image files as defined during setup have been captured), the event capturing system **16** directs where the pre-event, event and post-event video image files are to be permanently stored at **330** based on the predefined capture setup definition. If the predefined capture setup definition indicates that the pre-event, event and post-event video image files are to be stored in permanent storage at **332**, the event capturing system changes all video image files tagged as pre-event, event and post-event files in the working subdirectory to permanent in the same subdirectory at **334.** If the predefined capture setup definition indicates that the captured video image files are to be archived at **336,** all tagged pre-event, event and post-event video image files are copied into permanent storage at **338.**

If the predefined capture setup definition indicates that the pre-event, event and post-event video image files are to be merged at **340,** the files are recorded to working storage, merged and then stored in permanent storage. As a result, all video image files tagged as pre-event, event or post-event files are merged into a single storage file and the single storage file is identified by the name of the first video image file at **342.** Thereafter, the merged file is copied from the working storage to permanent storage at **344.**

Regardless of which option is selected for permanently recording the pre-event, event and post-event video image files, all video image files recorded during monitoring that are older than the oldest pre-event video image file are deleted from working storage at **346.** In addition, all video image files tagged as pre-event, event or post-event files are deleted from working storage and the name and path of the last event file created is saved for playback at **346.** Thereafter, the event capturing system displays an indication on display **22** that the system is in "recording" mode, removes all "X" from the display indicating the sources of any events and activates the "Exit", "Review", "Setup" and "Position" buttons at **348.**

Thereafter, control is transferred to block **206** to return control to the monitoring subsystem.

### Detailed Operation: Playback Subsystem

Referring to Figure 7F, the detailed operations of the playback subsystem will now be described. The user can select the playback feature by selecting the "review" button. If the user has selected to review, the event capturing system will complete recording the current video image file, close the current video image file and stop recording images at **400.** A determination is then made at **402** as to whether an event occurred. If an event occurred, the event capturing system changes control so that the currently selected permanent storage subdirectory will be used at **404.** Thereafter, the video image file having the indicator "ev" for the last event captured is selected by the event capturing system as the file to be reviewed at **406.**

If it is determined at **402** that an event has not occurred, the user then selects the video file containing the pre-event, event or post-event video images for the desired event from the directory listings at **408.**

Once the video image sequence or footage for the desired event has been selected, the user then has a number of options for reviewing the event at **410.** The user may select to end the review process by selecting the "Close" key at **412.** If the "Close" key is selected, control is returned to block **206** and the monitoring subsystem. If the user selects the "Files" key at **414,** the user can then select a new video image sequence file to review at **416** and control is returned to Block **410** to permit the user to select another option. The user may also print one or more frames of the video image sequence by selecting the "Print" key at **418** which causes the selected frame to be printed on a printer selected during setup at **420.**

In addition, the user may also set the playback rate as well as the position in the video image sequence to begin the review process. If the user selects the playback rate slide bar at **422,** the user then can select the playback rate in the range from 1 frame per second to 60 frames per second at **424.** Similarly, if the user selects the option of indicating a random position to begin the review process at **426,** the user can select the new position for beginning the review process at **428.**

Finally, the user may also select from a number of standard keys for controlling the playback of the captured video image sequence. These options which may be selected using the standard keys from a VCR recorder include "<<", "<", "■", "∥", ">" and ">>" at **430, 434, 438, 442, 446** and **450,** respectively. As will be understood by those having skill in the art, election of these options result in playing the video in reverse at twice the selected playback rate, playing the video in reverse at the selected playback rate, stopping the video, pausing the video, playing the video forwards at the selected playback rate and playing the video forwards at twice the selected playback rate at **432, 436, 440, 444, 448** and **452,** respectively.

In the drawings and specification, there have been disclosed typical preferred embodiments of the invention and, although specific terms are employed, they are used in a generic and descriptive sense only and not for purpose of limitation, the scope of the invention being set forth in the following claims.

## Claims

1. An event capturing system comprising: image capturing means for capturing a plurality of images of an operational environment;
circular storage means, having a first predetermined length, and responsive to the image capturing means, for continuously recording a first predetermined number of the plurality of images of the operational environment captured by the image capturing means;
event triggering means, responsive to occurrence of an event in said operational environment, for signalling the occurrence of an event in said operational environment; and
noncircular storage means, having a second predetermined length, and responsive to the image capturing means and the event triggering means, for continuously recording a second predetermined number of the plurality of images of the operational environment captured by the image capturing means;
wherein the first predetermined number is unrelated to the second predetermined number, **characterised by**:
second circular storage means, having a first predetermined length, and responsive to the image capturing means, for continuously recording a third predetermined number of the plurality of images of the operational environment captured by the image capturing means;
second event triggering means, responsive to occurrence of a second event in said operational environment, for signalling the occurrence of a second event in said operational environment; and
second noncircular storage means, having a fourth predetermined length, and responsive to the image capturing means and the second event triggering means, for continuously recording a fourth predetermined number of the plurality of images of the operational environment captured by the image capturing means;
wherein the third predetermined number is unrelated to the fourth predetermined number.

2. The event capturing system of Claim 1 wherein the plurality of images comprises a first image sequence having a plurality of images and a second image sequence having a plurality of images; and wherein the first image sequence is recorded in the circular storage means and the second image sequence is recorded in the noncircular storage means.

3. The event capturing system of Claim 1 or Claim 2 wherein the images captured by said image capturing means are video images.

4. The event capturing system of Claim 1 or Claim 2 wherein the images captured by said image capturing means are audio images.

5. The event capturing system of any of the preceding Claims wherein the image capturing means comprises at least one video camera.

6. The event capturing system of any of the preceding Claims further comprising permanent storage means for storing the first predetermined number of the plurality of images and the second predetermined number of the plurality of images therein.

7. The event capturing system of Claim 6 further comprising communication means connected to said circular storage means and to said noncircular storage means, wherein the permanent storage means is located at a location remote to the circular storage means and to the noncircular storage means and is connected to the communication means to permit the first predetermined number of the plurality of images and the second predetermined number of the plurality of images to be stored in the remotely located permanent storage means.

8. The event capturing system of any of the preceding Claims wherein the event triggering means comprises at least one discrete pulse triggering device.

9. The event capturing system of any of the preceding Claims wherein the event triggering means comprises at least one analog triggering device.

10. The event capturing system of any of the preceding Claims further comprising image display means for concurrently displaying the images captured by the image capturing means.

11. An event capturing system comprising:
image capturing means for capturing a plurality of images of an operational environment;
circular storage means, responsive to the image capturing means, for continuously circularly recording images of the operational environment captured by the image capturing means;
event triggering means, responsive to occurrence of an event in said operational environment, for signalling the occurrence of an event in said operational environment; and
converting means, responsive to the image capturing means and the event triggering means, for converting the circular storage means to noncircular storage means to enable the continuous noncircular recording of images of the operational environment captured by the image capturing means, **characterised by**:
second circular storage means, responsive to the image capturing means, for continuously circularly recording images of the operational environment captured by the image capturing means;
second event triggering means, responsive to occurrence of a second event in said operational environment, for signalling the occurrence of a second event in said operational environment; and
second converting means, responsive to the image capturing means and the second event triggering means, for converting the second circular storage means to a second noncircular storage means to enable the continuous noncircular recording of images of the operational environment captured by the image capturing means.

12. The event capturing system of Claim 11 wherein the second circular storage means has a third predetermined length and the second noncircular storage means has a fourth predetermined length; and wherein the third predetermined length is unrelated to the fourth predetermined length.

13. The event capturing system of Claim 11 or Claim 12 wherein the images captured by said image capturing means are video images.

14. The event capturing system of Claim 11 or Claim 12 wherein the images captured by said image capturing means are audio images.

## Patentansprüche

1. Ereignis-Erfassungssystem, welches folgendes umfasst: eine Abbildungs-Erfassungseinrichtung zum Erfassen einer Vielzahl von Abbildungen eines Betriebsumfelds;
eine zyklische Speichereinrichtung mit einer ersten vorgegebenen Länge, welche auf die Abbildungs-Erfassungseinrichtung anspricht und laufend eine erste vorgegebene Anzahl aus der Vielzahl von Abbildungen des Betriebsumfelds aufzeichnet, das von der Abbildungs-Erfassungseinrichtung erfasst wird;
eine auf das Auftreten eines Ereignisses in dem Betriebsumfeld ansprechende Ereignis-Auslöseeinrichtung zum Melden des Auftretens eines Ereignisses in dem Betriebsumfeld; und
eine nicht-zyklische Speichereinrichtung mit einer zweiten vorgegebenen Länge, welche auf die Abbildungs-Erfassungseinrichtung und die Ereignis-Auslöseeinrichtung anspricht und laufend eine zweite vorgegebene Anzahl aus der Vielzahl von Abbildungen des Betriebsumfelds aufzeichnet, das von der Abbildungs-Erfassungseinrichtung erfasst wird;
wobei die erste vorgegebene Anzahl nicht in Beziehung zur zweiten vorgegebenen Anzahl steht, **gekennzeichnet durch**:
eine zweite zyklische Speichereinrichtung mit einer ersten vorgegebenen Länge, welche auf die Abbildungs-Erfassungseinrichtung anspricht und laufend eine dritte vorgegebene Anzahl aus der Vielzahl von Abbildungen des Betriebsumfelds aufzeichnet, welches von der Abbildungs-Erfassungseinrichtung erfasst wird;
eine zweite auf das Auftreten eines zweiten Ereignisses in dem Betriebsumfeld ansprechende Ereignis-Auslöseeinrichtung zum Melden des Auftretens eines zweiten Ereignisses in dem Betriebsumfeld; und
eine zweite nicht-zyklische Speichereinrichtung mit einer vierten vorgegebenen Länge, welche auf die Abbildungs-Erfassungseinrichtung und die zweite Ereignis-Auslöseeinrichtung anspricht und eine vierte vorgegebene Anzahl aus der Vielzahl von Abbildungen des Betriebsumfelds aufzeichnet, welches von der Abbildungs-Erfassungseinrichtung erfasst wird,
wobei die dritte vorgegebene Anzahl nicht in Beziehung zur zweiten vorgegebenen Anzahl steht.

2. Ereignis-Erfassungssystem nach Anspruch 1, bei welchem die Vielzahl von Abbildungen eine erste Folge von Abbildungen mit einer Vielzahl von Abbildungen und eine zweite Folge von Abbildungen mit einer Vielzahl von Abbildungen umfasst und bei welchem die erste Folge von Abbildungen in der zyklischen Speichereinrichtung und die zweite Folge von Abbildungen in der nicht-zyklischen Speichereinrichtung aufgezeichnet werden.

3. Ereignis-Erfassungssystem nach Anspruch 1 oder 2, bei welchem die von der Ereignis-Erfassungseinrichtung erfassten Abbildungen Bild-Abbildungen sind.

4. Ereignis-Erfassungssystem nach Anspruch 1 oder 2, bei welchem die von der Ereignis-Erfassungseinrichtung erfassten Abbildungen Ton-Abbildungen sind.

5. Ereignis-Erfassungssystem nach einem der vorhergehenden Ansprüche, bei welchem die Abbildungs-Erfassungseinrichtung mindestens eine Video-Kamera aufweist.

6. Ereignis-Erfassungssystem nach einem der vorhergehenden Ansprüche, welches des weiteren eine Festspeicher-Einrichtung zum Abspeichern der ersten vorgegebenen Anzahl aus der Vielzahl von Abbildungen und der zweiten vorgegebenen Anzahl aus der Vielzahl von Abbildungen aufweist.

7. Ereignis-Erfassungssystem nach Anspruch 6, welches des weiteren eine mit der zyklischen Speichereinrichtung und der nicht-zyklischen Speichereinrichtung verbundene Kommunikationseinrichtung aufweist, wobei sich die Festspeicher-Einrichtung an einem vom Ort der zyklischen Speichereinrichtung und der nicht-zyklischen Speichereinrichtung entfernten Ort befindet und mit der Kommunikationseinrichtung so verbunden ist, dass sie die Abspeicherung der ersten vorgegebenen Anzahl aus der Vielzahl von Abbildungen und der zweiten vorgegebenen Anzahl aus der Vielzahl von Abbildungen in der entfernt installierten Festspeicher-Einrichtung ermöglicht.

8. Ereignis-Erfassungssystem nach einem der vorhergehenden Ansprüche, bei welchem die Ereignis-Auslöseeinrichtung mindestens eine Vorrichtung zur Auslösung diskreter Impulse aufweist.

9. Ereignis-Erfassungssystem nach einem der vorhergehenden Ansprüche, bei welchem die Ereignis-Auslöseeinrichtung mindestens eine analoge Auslösevorrichtung aufweist.

10. Ereignis-Erfassungssystem nach einem der vorhergehenden Ansprüche, welches des weiteren eine Abbildungs-Anzeigeeinrichtung zum gleichzeitigen Anzeigen der von der Abbildungs-Erfassungseinrichtung erfassten Abbildungen aufweist.

11. Ereignis-Erfassungssystem, welches folgendes aufweist:
eine Abbildungs-Erfassungseinrichtung zum Erfassen einer Vielzahl von Abbildungen eines Betriebsumfelds;
eine zyklische Speichereinrichtung, welche auf die Abbildungs-Erfassungseinrichtung anspricht und laufend zyklisch Abbildungen des Betriebsumfelds aufzeichnet, das von der Abbildungs-Erfassungseinrichtung erfasst wird;
eine auf das Auftreten eines Ereignisses in dem Betriebsumfeld ansprechende Ereignis-Auslöseeinrichtung zum Melden des Auftretens eines Ereignisses in dem Betriebsumfeld; und
eine auf die Abbildungs-Erfassungseinrichtung und die Ereignis-Auslöseeinrichtung ansprechende Umwandlungseinrichtung zum Umwandeln der zyklischen Speichereinrichtung in eine nicht-zyklische Speichereinrichtung in der Form, dass die laufende nicht-zyklische Aufzeichnung von Abbildungen des von der Abbildungs-Erfassungseinrichtung erfassten Betriebsumfelds möglich wird, **gekennzeichnet durch**:
eine zweite zyklische Speichereinrichtung, welche auf die Abbildungs-Erfassungseinrichtung anspricht und laufend Abbildungen des Betriebsumfelds aufzeichnet, welches von der Abbildungs-Erfassungseinrichtung erfasst wird;
eine zweite auf das Auftreten eines zweiten Ereignisses in dem Betriebsumfeld ansprechende Ereignis-Auslöseeinrichtung zum Melden des Auftretens eines zweiten Ereignisses in dem Betriebsumfeld; und
eine zweite auf die Abbildungs-Erfassungseinrichtung und die zweite Ereignis-Auslöseeinrichtung ansprechende Umwandlungseinrichtung zum Umwandeln der zweiten zyklischen Speichereinrichtung in eine zweite nicht-zyklische Speichereinrichtung in der Form, dass die laufende nicht-zyklische Aufzeichnung von Abbildungen des von der Abbildungs-Erfassungseinrichtung erfassten Betriebsumfelds möglich wird.

12. Ereignis-Erfassungssystem nach Anspruch 11, bei welchem die zweite zyklische Speichereinrichtung eine dritte vorgegebene Länge aufweist und die zweite nicht-zyklische Speichereinrichtung eine vierte vorgegebene Länge besitzt, und bei welchem die dritte vorgegebene Länge nicht in Beziehung zur vierten vorgegebenen Länge steht.

13. Ereignis-Erfassungssystem nach Anspruch 11 oder Anspruch 12, bei welchem die von der Ereignis-Erfassungseinrichtung erfassten Abbildungen Bild-Abbildungen sind.

14. Ereignis-Erfassungssystem nach Anspruch 11 oder 12, bei welchem die von der Ereignis-Erfassungseinrichtung erfassten Abbildungen Ton-Abbildungen sind.

## Revendications

1. Système d'acquisition d'évènements comprenant: les moyens d'acquisition d'images pour acquérir une pluralité d'images d'un environnement opérationnel;
des moyens de mémoire circulaire possédant une première longueur prédéterminée et aptes à répondre aux moyens d'acquisition d'images pour enregistrer continûment un premier nombre prédéterminé de la pluralité d'images de l'environnement opérationnel captées par les moyens d'acquisition d'images;
des moyens de déclenchement d'évènements aptes à répondre à l'apparition d'un événement dans ledit environnement opérationnel pour signaler l'apparition d'un événement dans ledit environnement opérationnel; et
des moyens de mémoire non circulaire possédant une seconde longueur prédéterminée et aptes à répondre aux moyens d'acquisition d'images et aux moyens de déclenchement d'événement pour enregistrer de façon continue un second nombre prédéterminé de la pluralité d'images de l'environnement opérationnel captées par les moyens d'acquisition d'images;
le premier nombre prédéterminé n'est pas associé au second nombre prédéterminé,
**caractérisé par**:
des seconds moyens de mémoire circulaire, possédant une première longueur prédéterminée et aptes à répondre aux moyens d'acquisition d'images pour l'enregistrement continu d'un troisième nombre prédéterminé de la pluralité d'images de l'environnement opérationnel captées par les moyens d'acquisition d'images;
des seconds moyens de déclenchement d'événements aptes à répondre à l'apparition d'un second événement dans ledit environnement opérationnel, pour signaler l'apparition d'un second événement d'environnement opérationnel; et
des seconds moyens de mémoire non circulaire possédant une des seconds moyens de mémoire non circulaire possédant une quatrième longueur prédéterminée et aptes à répondre aux moyens d'acquisition d'images et aux seconds moyens de déclenchement d'événements, pour enregistrer continûment un quatrième nombre prédéterminé de la pluralité d'images de l'environnement opérationnel captées par les moyens d'acquisition d'images;
le troisième nombre prédéterminé n'étant pas associé au quatrième nombre prédéterminé.

2. Système d'acquisition d'événements selon la revendication 1, dans lequel la pluralité d'images comprend une première séquence d'images possédant une pluralité d'images et une seconde séquence d'images possédant une pluralité d'images; et dans lequel la première séquence d'images est enregistrée dans les moyens de mémoire circulaire et la seconde séquence d'images est délivrée dans les moyens de mémoire non circulaire.

3. Système d'acquisition d'événements selon la revendication 1 ou la revendication 2, dans lequel les images captées par lesdits moyens d'acquisition d'images sont des images vidéo.

4. Système d'acquisition d'évènements selon la revendication 1 ou la revendication 2, dans lequel les images captées par lesdits moyens d'acquisition d'images sont des images audio.

5. Système d'acquisition d'évènements selon l'une quelconque des revendications précédentes, dans lequel les moyens d'acquisition d'images comprennent au moins une caméra vidéo.

6. Système d'acquisition d'événement selon l'une quelconque des revendications précédentes, comprenant en outre des moyens de mémoire permanente pour mémoriser le premier nombre prédéterminé de la pluralité d'images et le second nombre prédéterminé de la pluralité d'images.

7. Système d'acquisition d'évènements selon la communication connectés auxdits moyens de mémoire circulaire et auxdits moyens de mémoire non circulaire, les moyens de mémoire permanente étant situés en un emplacement distant des moyens de mémoire circulaire et des moyens de mémoire non circulaire et étant connectés au moyen de communication pour permettre la mémorisation du premier nombre prédéterminé de la pluralité d'images et du second nombre prédéterminé de la pluralité d'images dans les moyens de mémoire permanente situés à distance.

8. Système d'acquisition d'évènements selon l'une quelconque des revendications précédentes, dans lequel les moyens de déclenchement d'évènements comprennent au moins un dispositif de déclenchement d'impulsions discrètes.

9. Système d'acquisition d'évènements selon l'une quelconque des revendications précédentes, dans lequel les moyens de déclenchement d'événements comprennent au moins un dispositif de déclenchement analogique.

10. Système d'acquisition d'évènements selon l'une quelconque des revendications précédentes, comprenant en outre des moyens d'affichage d'images pour afficher simultanément les images captées par les moyens d'acquisition d'images.

11. Système d'acquisition d'images comprenant:
des moyens d'acquisition d'images pour acquérir une pluralité d'images d'un environnement opérationnel;
des moyens de mémoire circulaire aptes à répondre aux moyens d'acquisition d'images pour enregistrer continûment de manière circulaire des images de l'environnement opérationnel captées par les moyens d'acquisition d'images; des moyens de déclenchement d'évènements aptes à répondre à l'apparition d'un événement dans ledit environnement opérationnel pour signaler l'apparition d'un événement dans ledit environnement opérationnel;
des moyens de conversion, aptes à répondre aux moyens d'acquisition d'images et aux moyens de déclenchement d'acquisition d'images et aux moyens de déclenchement d'évènements pour convertir les moyens de mémoire circulaire en des moyens de mémoire non circulaire de manière à permettre l'enregistrement continu non circulaire d'images de l'environnement opérationnel captées par les moyens d'acquisition d'images,
**caractérisé par**:
des seconds moyens de mémoire circulaire, aptes à répondre aux moyens d'acquisition d'image pour l'enregistrement continu de manière circulaire d'images de l'environnement opérationnel capté par les moyens d'acquisition d'images;
des seconds moyens de déclenchement d'événements aptes à répondre à l'apparition d'un second événement dans ledit environnement opérationnel, pour signaler l'apparition d'un second événement d'environnement opérationnel; et
des seconds moyens de conversion, aptes à répondre aux moyens d'acquisition d'images et aux seconds moyens de déclenchement d'événements, pour convertir les seconds moyens de mémoire circulaire en des seconds moyens de mémoire non circulaires, des moyens pour permettre l'enregistrement continu non circulaire d'images de l'environnement opérationnel capté par les moyens d'acquisition d'images.

12. Système d'acquisition d'événements selon la revendication 11, dans lequel les seconds moyens de mémoire circulaire possèdent une troisième longueur prédéterminée et des seconds moyens de mémoire non circulaire possèdent une quatrième longueur prédéterminée; et la troisième longueur prédéterminée n'est pas associée à la quatrième longueur prédéterminée.

13. Système d'acquisition d'événements selon la revendication 11 ou la revendication 12, dans lequel les images sont captées par lesdits moyens d'acquisition d'images sont des images vidéo.

14. Système d'acquisition d'évènements selon la revendication 11 ou la revendication 12, dans lequel les images captées par lesdits moyens d'acquisition d'image sont des images audio.
